# EUROPÄISCHE PATENTSCHRIFT

(11) **EP 3 491 339 B1**
(45) Veröffentlichungstag und Bekanntmachung des Hinweises auf die Patenterteilung: **06.03.2024**
(21) Anmeldenummer: 17731512.4
(22) Anmeldetag: 13.06.2017
(51) Int. Cl.: G01C 21/36

(54) **VERFAHREN, VORRICHTUNG UND COMPUTERLESBARES SPEICHERMEDIUM MIT INSTRUKTIONEN ZUR BESTIMMUNG DER LATERALEN POSITION EINES FAHRZEUGES RELATIV ZU DEN FAHRSTREIFEN EINER FAHRBAHN**
METHOD, DEVICE AND COMPUTER-READABLE STORAGE MEDIUM WITH INSTRUCTIONS FOR DETERMINING THE LATERAL POSITION OF A VEHICLE RELATIVE TO THE LANES OF A ROAD
PROCÉDÉ, DISPOSITIF ET SUPPORT DE STOCKAGE LISIBLE PAR ORDINATEUR CONTENANT DES INSTRUCTIONS PERMETTANT DE DÉTERMINER LA POSITION LATÉRALE D'UN VÉHICULE PAR RAPPORT AUX VOIES DE CIRCULATION D'UNE CHAUSSÉE

(30) Priorität: 27.07.2016 DE 102016213782
(43) Veröffentlichungstag der Anmeldung: 05.06.2019
(73) Patentinhaber: Volkswagen Aktiengesellschaft, 38440 Wolfsburg (DE)
(72) Erfinder: SCHACK, Moritz, 38126 Braunschweig (DE); KERPER, Markus, 38116 Braunschweig (DE)
(86) Internationale Anmeldenummer: PCT/EP2017/064379
(87) Internationale Veröffentlichungsnummer: WO 2018/019464

(56) Entgegenhaltungen:
- WO-A1-2013/133752

## Beschreibung

Die vorliegende Erfindung betrifft ein Verfahren, eine Vorrichtung und ein computerlesbares Speichermedium mit Instruktionen zur Bestimmung der lateralen Position eines Fahrzeugs relativ zu den Fahrstreifen einer Fahrbahn, und insbesondere zur Bestimmung einer relativen lateralen Position mit Sub-Fahrstreifengenauigkeit. Die vorliegende Erfindung betrifft weiterhin ein Fahrzeug mit einer solchen Vorrichtung.

Moderne Fahrzeuge werden zunehmend autonomer, d.h. die Fahrzeuge stellen dem Fahrer mehr und mehr Funktionen und Systeme zur Verfügung, die ihn bei der Kontrolle des Fahrzeugs durch Hinweise unterstützen oder Teile der Fahrzeugkontrolle übernehmen. Für derartige Funktionen und Systeme wird eine Vielzahl von Information über das Fahrzeug und seine Umgebung benötigt.

Für die Funktion "fahrstreifengenaue Navigation" wird beispielsweise die Kenntnis über den Fahrstreifen benötigt, auf dem sich das zu navigierende Fahrzeug, das "Ego-Fahrzeug", befindet. Dieser Fahrstreifen wird auch als "Ego-Fahrstreifen" bezeichnet. Weiterhin werden für das automatische Fahren und Car-to-Car-basierte Anwendungen neben der Kenntnis des Ego-Fahrstreifens auch genauere Informationen hinsichtlich der Querablage des Ego-Fahrzeugs relativ zum Ego-Fahrstreifen benötigt. Es muss zu jeder Zeit mit Sub-Fahrstreifengenauigkeit bekannt sein, wo sich das Ego-Fahrzeug lateral in Bezug auf die Fahrbahn befindet.

Die Druckschrift US 2014/0358321 A1 offenbart ein Verfahren zur Erkennung und Nachverfolgung der Begrenzungen einer Fahrspur. Das Verfahren verwendet Karten mit Informationen zur Straßengeometrie, GPS-Daten, Verlaufsdaten und die Positionen anderer Fahrzeuge zur Bestimmung der aktuellen Position.

Die Druckschrift EP 2 899 669 A1 beschreibt ein Verfahren zur Bestimmung der lateralen Position eines Fahrzeugs relativ zur Fahrspur einer Straße. Mit Hilfe einer Kamera werden geometrische Aspekte der Fahrspuren ermittelt, beispielsweise Fahrbahnmarkierungen. Die ermittelten Aspekte werden klassifiziert und dienen zur Positionsbestimmung. Die Klassifizierung erfordert ein Training der Klassifizierungseinheit.

Die Druckschrift DE 10 2012 104 786 A1 beschreibt ein System zum genauen Abschätzen einer Spur, in welcher ein Fahrzeug fährt. Ein System zur Spurermittlung stellt geschätzte Spuren bereit, die auf unterschiedliche Weisen bestimmt werden. Beispiele sind von einer Kamera erfasste Spurmarkierungen, ein Führungsfahrzeug oder GPS/Karten, welche bis auf Spurniveau genau sind. Die geschätzten Spuren sind mit Konfidenzinformationen versehen. Die geschätzten Spuren und die entsprechenden Konfidenzinformationen werden fusioniert, um eine ermittelte Spur zu ergeben.

Die Druckschrift WO 2013/133752 A1 beschreibt ein Verfahren zum Bestimmen der Position eines Fahrzeugs in Bezug auf eine Fahrbahn der Fahrzeugroute. Bei dem Verfahren werden kontinuierlich Abstände zwischen einer Seite des Fahrzeugs und topografischen Merkmalen der Fahrzeugroute in der Nähe dieser Seite geschätzt. Basierend auf diesen geschätzten Abständen wird die laterale Position des Fahrzeugs bestimmt.

Zusammenfassend werden zurzeit im Wesentlichen drei Lösungsansätze für die Bestimmung der lateralen Position eines Fahrzeugs relativ zu einer Fahrbahn verfolgt.

Ein erster Ansatz besteht in der Verwendung einer hochgenau eingemessenen digitalen Fahrstreifengeometriekarte mit einer absoluten Genauigkeit im Zentimeterbereich in Verbindung mit einem hochgenauen Zweifrequenz-GPS-System. Hierbei wird die Position in der Karte mit Hilfe des GPS-Sensors ohne weitere bildgebende Sensorik bestimmt. Durch GPS- und Kartenungenauigkeiten bezüglich der absoluten Position ist allerdings oftmals keine Zuordnung des Ego-Fahrzeugs zum richtigen Fahrstreifen möglich. Zudem ist eine Lösung mit einer hochgenauen Karte und hochgenauem GPS sehr kostenintensiv.

Ein weiterer Ansatz besteht in der Nutzung bildgebender Sensoren, z.B. eines Kamerasystems. Hierdurch wird die Zuordnung des Ego-Fahrzeugs zu Fahrstreifen bezogen auf von der Sensorik ermittelte Fahrstreifen ermöglicht. Die Nutzung von bildgebenden Sensoren ohne die gleichzeitige Verwendung einer digitalen Karte führt allerdings dazu, dass häufig nur ein oder zwei Fahrstreifen durch die Sensorik erkannt werden. Die Positionierung des Ego-Fahrzeugs kann dann nur relativ zu den erkannten Fahrstreifen erfolgen, nicht aber relativ zu allen Fahrstreifen.

Ein dritter Ansatz kombiniert bildgebende Sensorik mit Karteninformationen bezüglich Anzahl und Markierungstyp der Fahrstreifen. Durch die Nutzung bildgebender Sensoren und der Information aus einer digitalen Karte, wie viele Fahrstreifen vorhanden sind und mit welcher Randmarkierung diese vorliegen (gestrichelt, durchgezogen,...), kann das Ego-Fahrzeug zu allen Fahrstreifen zugeordnet werden. Aufgrund von Abstandsfehlern der durch die Sensoren erfassten Fahrstreifenmarkierungen relativ zum Ego-Fahrzeug ist jedoch die Genauigkeit der Querablage bezüglich des entsprechenden Fahrstreifens für die oben genannten Anwendungen nicht ausreichend.

Es ist eine Aufgabe der Erfindung, ein Verfahren und eine Vorrichtung zur Bestimmung einer lateralen Position eines Fahrzeugs relativ zu den Fahrstreifen einer Fahrbahn zur Verfügung zu stellen, die eine Bestimmung der relativen lateralen Position mit Sub-Fahrstreifengenauigkeit ermöglichen.

Diese Aufgabe wird durch ein Verfahren mit den Merkmalen des Anspruchs 1, durch eine Vorrichtung mit den Merkmalen des Anspruchs 6, sowie durch ein computerlesbares Speichermedium mit Instruktionen gemäß Anspruch 7 gelöst. Bevorzugte Ausgestaltungen der Erfindung sind Gegenstand der abhängigen Ansprüche.

Gemäß einem ersten Aspekt der Erfindung umfasst ein Verfahren zur Bestimmung einer lateralen Position eines Fahrzeugs relativ zu den Fahrspuren einer Fahrbahn die Schritte:
- Detektieren von Fahrbahnmarkierungen;
- Bestimmen einer Ausgangsposition für das Fahrzeug basierend auf Empfangsdaten eines GPS-Empfängers;
- wobei, wenn festgestellt wird, dass die detektierten Fahrbahnmarkierungen (FBM) nicht in ausreichender Anzahl und Genauigkeit verfügbar sind, um durch Vergleichen der detektierten Fahrbahnmarkierungen mit Fahrbahnmarkierungsinformationen aus einer Fahrstreifengeometriekarte für die für das Fahrzeug bestimmte Ausgangsposition eine laterale Position des Fahrzeugs zu ermitteln, eine näherungsweise laterale Position unter Berücksichtigung von Informationen aus der Fahrstreifengeometriekarte ermittelt wird, wobei die folgenden Schritte ausgeführt werden:
- Konstruieren einer Orthogonallinie an der Ausgangsposition orthogonal zur einer derzeitigen Fahrzeugbewegung;
- Bestimmen von Schnittpunkten zwischen der Orthogonallinie und den Fahrspurmitten der Fahrstreifengeometriekarte für die für das Fahrzeug bestimmte Ausgangsposition;
- Ermitteln auf Basis der Schnittpunkte, dass unter Berücksichtigung konfigurierter Annahmen über mögliche Fahrmanöver, die definieren, welche Fahrspuren als befahrbar angesehen werden, nur einer der Schnittpunkte auf einer als befahrbar angesehenen Fahrspur liegt; und
- Ermitteln des Schnittpunktes mit der als befahrbar angesehenen Fahrspur als näherungsweise laterale Position des Fahrzeugs; oder
- Konstruieren einer Orthogonallinie orthogonal zu einer gemittelten Fahrzeugbewegung zwischen einer vorherigen Iteration der Positionsbestimmung und der derzeitigen Fahrzeugbewegung und an einer longitudinalen Position zwischen einer in der vorherigen Iteration bestimmten abschließenden Position und der derzeitigen Ausgangsposition;
- Bestimmen von Schnittpunkten zwischen der Orthogonallinie und den Fahrbahnmarkierungen und Fahrspurmitten der Fahrstreifengeometriekarte für die für das Fahrzeug bestimmte Ausgangsposition;
- Ermitteln auf Basis der Schnittpunkte, unter Berücksichtigung konfigurierter Annahmen über mögliche Fahrmanöver, die definieren, welche Fahrbahnmarkierungen als überfahrbar angesehen werden und welche Fahrspuren als befahrbar angesehen werden, dass ausgehend von der in der vorherigen Iteration bestimmten abschließenden Position kein Fahrspurwechsel möglich ist; und
- Ermitteln einer Position auf der durch die Ausgangsposition identifizierten Fahrspur als näherungsweise laterale Position des Fahrzeugs.

Gemäß einem weiteren Aspekt der Erfindung weist eine Vorrichtung zur Bestimmung einer lateralen Position eines Fahrzeugs relativ zu den Fahrspuren einer Fahrbahn auf:
- eine Bildverarbeitungseinheit zum Detektieren von Fahrbahnmarkierungen;
- eine Positionsbestimmungseinheit zum Bestimmen einer Ausgangsposition für das Fahrzeug basierend auf Empfangsdaten eines GPS-Empfängers; und
- eine Auswerteeinheit die eingerichtet das Verfahren gemäß einem der Ansprüche 1 bis 5 auszuführen.

Gemäß einem weiteren Aspekt der Erfindung enthält ein computerlesbares Speichermedium Instruktionen, die bei Ausführung durch einen Computer den Computer zur Ausführung der Schritte des Verfahrens gemäß einem der Ansprüche 1 bis 5 zur Bestimmung einer lateralen Position eines Fahrzeugs relativ zu den Fahrspuren (FS) einer Fahrbahn (FB) veranlassen.

Vorzugsweise werden ein erfindungsgemäßes Verfahren oder eine erfindungsgemäße Vorrichtung in einem autonom oder manuell gesteuerten Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zur Bestimmung einer lateralen Position eines Fahrzeugs relativ zu den Fahrstreifen einer Fahrbahn;
- Fig. 2: zeigt ein erstes Ausführungsbeispiel einer Vorrichtung zur Bestimmung einer lateralen Position eines Fahrzeugs relativ zu den Fahrstreifen einer Fahrbahn;
- Fig. 3: zeigt ein zweites Ausführungsbeispiel einer Vorrichtung zur Bestimmung einer lateralen Position eines Fahrzeugs relativ zu den Fahrstreifen einer Fahrbahn;
- Fig. 4: zeigt eine bevorzugte Ausführungsform des in Fig. 1 dargestellten Verfahrens;
- Fig. 5: zeigt beispielhaft eine Positionsbestimmung bei nur einer befahrbaren Fahrspur;
- Fig. 6: zeigt ein Beispiel für eine Situation, bei der ein Spurwechsel nicht möglich ist;
- Fig. 7: zeigt eine Situation, bei der ein Spurwechsel möglich ist; und
- Fig. 8: zeigt schematisch ein Verfahren zur Bestimmung einer näherungsweisen lateralen Position basierend auf der Bewertung möglicher fortbewegter Positionen.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

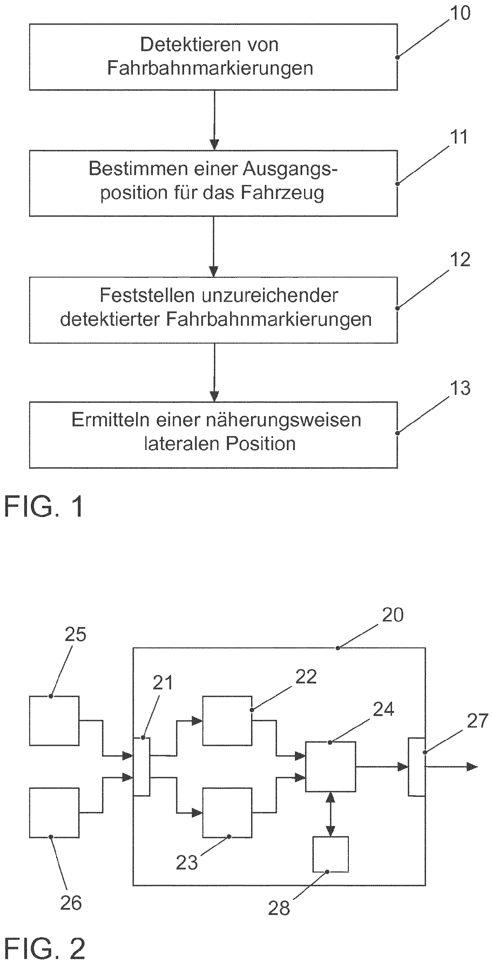

Fig. 1 zeigt schematisch ein Verfahren zur Bestimmung einer lateralen Position eines Fahrzeugs relativ zu den Fahrstreifen einer Fahrbahn. In einem ersten Schritt werden Fahrbahnmarkierungen detektiert 10. Weiterhin wird eine Ausgangsposition für das Fahrzeug bestimmt 11. Wird festgestellt 12, dass die detektierten Fahrbahnmarkierungen nicht ausreichen, um durch Vergleichen der detektierten Fahrbahnmarkierungen mit Fahrbahnmarkierungsinformationen aus einer Fahrstreifengeometriekarte für die für das Fahrzeug bestimmte Ausgangsposition eine laterale Position des Fahrzeugs zu ermitteln, so wird stattdessen eine näherungsweise laterale Position des Fahrzeugs unter Berücksichtigung von Informationen aus der Fahrstreifengeometriekarte ermittelt 13. Bei den Informationen handelt es sich insbesondere um Angaben zu Fahrspuren und/oder Fahrbahnmarkierungen. Beispielsweise kann für die Bestimmung der näherungsweisen lateralen Position überprüft werden, ob basierend auf der Ausgangsposition nur eine Fahrspur gemäß den Informationen aus der Fahrstreifengeometriekarte als befahrbar anzusehen ist oder ob ein Wechsel der Fahrspur unmöglich ist. Dazu kann insbesondere das Einhalten der Straßenverkehrsordnung und/oder eine Abweichung zwischen einem Kurswinkel des Fahrzeugs und einem Richtungswinkel der Fahrspur berücksichtigt werden. In diesen Fällen ist die Fahrspur eindeutig identifiziert und es kann eine Position auf der identifizierten Fahrspur als näherungsweise laterale Position des Fahrzeugs bestimmt werden. Falls für das Fahrzeug mehrere mögliche Fahrspuren ermittelt werden, kann die näherungsweise laterale Position basierend auf einem mehrstufigen Verfahren aus Bestimmung möglicher Fahrzeugpositionen, Bewertung der Positionen und Auswahl der bestbewerteten Position ermittelt werden.

Fig. 2 zeigt eine vereinfachte schematische Darstellung einer ersten Ausführungsform einer Vorrichtung 20 zur Bestimmung einer lateralen Position eines Fahrzeugs relativ zu den Fahrstreifen einer Fahrbahn. Die Vorrichtung 20 hat eine Bildverarbeitungseinheit 22 zum Detektieren 10 von Fahrbahnmarkierungen. Zu diesem Zweck nutzt die Bildverarbeitungseinheit 22 beispielsweise Bildinformationen einer Kameraeinheit 25, die über einen Eingang 21 der Vorrichtung 20 empfangen werden. Die Vorrichtung 20 hat weiterhin eine Positionsbestimmungseinheit 23 zum Bestimmen 11 einer Ausgangsposition für das Fahrzeug. Die Ausgangsposition wird beispielsweise basierend auf Empfangsdaten eines GPS-Empfängers 26 bestimmt, die ebenfalls über den Eingang 21 empfangen werden können. Eine Auswerteeinheit 24 ist eingerichtet festzustellen 12, dass die detektierten Fahrbahnmarkierungen nicht ausreichen, um durch Vergleichen der detektierten Fahrbahnmarkierungen mit Fahrbahnmarkierungsinformationen aus einer Fahrstreifengeometriekarte für die für das Fahrzeug bestimmte Ausgangsposition eine laterale Position des Fahrzeugs zu ermitteln. In diesem Fall ermittelt 13 die Auswerteeinheit 24 eine näherungsweise laterale Position des Fahrzeugs unter Berücksichtigung von Informationen aus der Fahrstreifengeometriekarte, insbesondere unter Berücksichtigung von Angaben zu Fahrspuren und/oder Fahrbahnmarkierungen.

Beispielsweise kann die Auswerteeinheit 24 für die Bestimmung der näherungsweisen lateralen Position überprüfen, ob basierend auf der Ausgangsposition nur eine Fahrspur gemäß den Informationen aus der Fahrstreifengeometriekarte als befahrbar anzusehen ist oder ob ein Wechsel der Fahrspur unmöglich ist. Dazu kann insbesondere das Einhalten der Straßenverkehrsordnung und/oder eine Abweichung zwischen einem Kurswinkel des Fahrzeugs und einem Richtungswinkel der Fahrspur berücksichtigt werden. In diesen Fällen ist die Fahrspur eindeutig identifiziert und es kann eine Position auf der identifizierten Fahrspur als näherungsweise laterale Position des Fahrzeugs bestimmt werden. Falls für das Fahrzeug mehrere mögliche Fahrspuren ermittelt werden, kann die Auswerteeinheit 24 die näherungsweise laterale Position basierend auf einem mehrstufigen Verfahren aus Bestimmung möglicher Fahrzeugpositionen, Bewertung der Positionen und Auswahl der bestbewerteten Position ermitteln.

Die von der Auswerteeinheit 24 bestimmte laterale Position des Fahrzeugs wird vorzugsweise über einen Ausgang 27 der Vorrichtung 20 für die weitere Verarbeitung verfügbar gemacht, beispielsweise für die Verarbeitung in einem Spurführungssystem. Sie kann zudem in einem Speicher 28 der Vorrichtung 20 abgelegt werden, beispielsweise für eine spätere Auswertung. Der Eingang 21 und der Ausgang 27 können als getrennte Schnittstellen oder als eine kombinierte bidirektionale Schnittstelle implementiert sein. Die Bildverarbeitungseinheit 22, die Positionsbestimmungseinheit 23 sowie die Auswerteeinheit 24 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft.

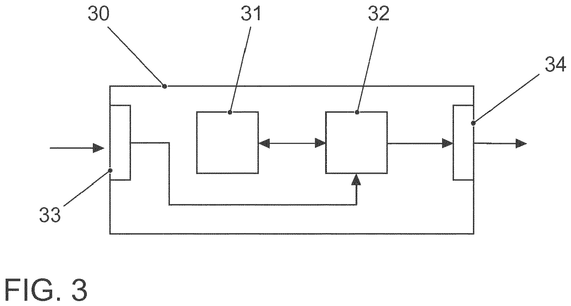

Fig. 3 zeigt eine vereinfachte schematische Darstellung einer zweiten Ausführungsform einer Vorrichtung 30 zur Bestimmung einer lateralen Position eines Fahrzeugs relativ zu den Fahrstreifen einer Fahrbahn. Die Vorrichtung 30 weist einen Prozessor 32 und einen Speicher 31 auf. Beispielsweise handelt es sich bei der Vorrichtung 30 um einen Computer oder eine Workstation. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 28, 31 der beschriebenen Ausführungsformen können volatile und/oder nichtvolatile Speicherbereiche aufweisen und unterschiedlichste Speichergeräte und Speichermedien umfassen, beispielsweise Festplatten, optische Speichermedien oder Halbleiterspeicher.

### Beschreibung einer bevorzugten Ausführungsform

Nachfolgend soll eine bevorzugte Ausführungsform der Erfindung im Detail beschrieben werden. Das Verfahren basiert auf einer Reihe von Eingangsdaten. Benötigt werden zunächst die von dem bildgebenden Sensorsystem ermittelten Geometrie- und Eigenschaftsinformationen der sichtbaren Fahrbahnmarkierungen. Im Folgenden werden diese als BV-Linien bezeichnet (BV für Bildverarbeitung). Ebenfalls benötigt wird eine absolute Positionsinformation mit Richtungs- und Geschwindigkeitsangabe. Diese kann beispielsweise vom Fahrzeug-GPS zur Verfügung gestellt werden. Für die absoluten Positionsinformationen ist in der vorliegenden Ausführungsform eine Unterscheidung vorgesehen zwischen absoluten Positionsinformationen, die das direkte Ergebnis einer Ortung durch ein GNSS-System (GNSS: Global Navigation Satellite System) repräsentieren (GNSS Positionsdaten), und solchen, die basierend auf einer zurückliegenden GNSS-Ortung durch Dead-Reckoning (Koppelnavigation) interpoliert wurden (Absolute Positionsdaten). Optional kann auch eine relative, sprungfreie Positionsinformation genutzt werden, die z.B. mittels Bewegungsschätzung ermittelt wird. Zusätzlich werden Kartendaten mit hoher relativer Genauigkeit bezüglich Fahrstreifen und Fahrbahnmarkierungen verwendet. Diese werden beispielsweise durch einen Kartendaten-Server 110 zur Verfügung gestellt. Die Karteninformationen werden im Folgenden als DLM-Lanes (DLM: Detailed Lane Model, detailliertes Fahrstreifenmodell) und DLM-Lanemarkings bezeichnet. Vorzugsweise werden Ergebnisse aus dem vorausgegangenen Ablauf oder vorausgegangenen Abläufen des Verfahrens als Historie mit einbezogen, außer natürlich in der ersten Iteration.

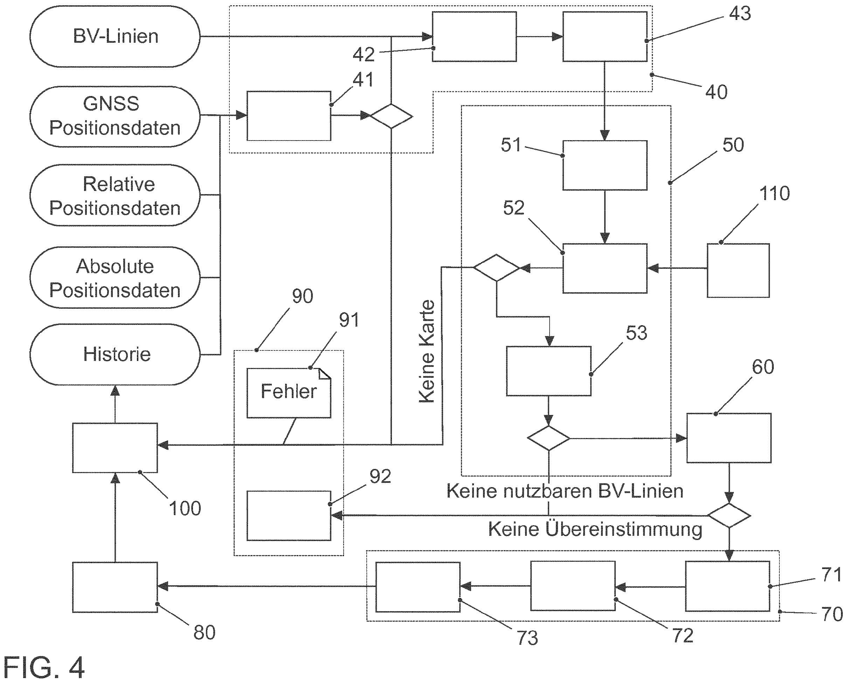

Der prinzipielle Ablauf des Verfahrens gliedert sich in mehrere Teile, die in Fig. 4 teilweise in gestrichelt dargestellten Blöcken zusammengefasst sind.

Im Rahmen einer Aufbereitung 40 der Eingangsdaten wird eine ungefähre Fahrzeugposition bestimmt 41. Diese dient als Ausgangspunkt für den Abgleich von Fahrbahnmarkierungen mit Kartendaten. Zudem erfolgt eine Umrechnung und Aggregation der Geometrien der BV-Linien.

Die Geometrien der durch das Kamerasystem detektierten Fahrbahnmarkierungen werden typischerweise durch Klothoiden in einem fahrzeugrelativen, kartesische Koordinatensystem beschrieben. Die Klothoidenbeschreibungen werden überführt in Polylines, die die Klothoidengeometrien in guter Näherung nachbilden. Die Umwandlung in Polylines wird durchgeführt, da die nachfolgend auf den Fahrbahnmarkierungsgeometrien operierenden Algorithmen so deutlich einfacher zu implementieren sind. In der vorliegenden Ausführungsform werden die Koordinaten der Polylines aus dem fahrzeugrelativen, kartesischen Koordinatensystem in das WGS84-Koordinatensystem überführt 42. Die nachfolgenden Algorithmen operieren im WGS84-Koordinatensystem, da auch die Kartendaten und die Fahrzeugpositions- und -bewegungsinformationen typischerweise in diesem Koordinatensystem vorliegen.

Die Geometrien der durch das Kamerasystem erkannten Fahrbahnmarkierungen beginnen stets kurz vor dem Fahrzeug und haben eine Ausdehnung von einigen Metern ungefähr in Fahrtrichtung/Kamerablickrichtung. Gelegentlich werden durch das Kamerasystem Fahrbahnmarkierungen zunächst korrekt erkannt und übermittelt, jedoch kurz darauf nicht mehr detektiert. Die bei einer Algorithmusiteration vorhandenen BV-Linien werden darum stets zwischengespeichert und bei der nächsten Iteration mit den neu durch das Kamerasystem übermittelten Geometrien abgeglichen 43.

Nachfolgend werden wesentliche Geometrieaspekte extrahiert 50. Hierbei werden Punkte von BV-Linien und DLM-Lanemarkings zur longitudinalen Fahrzeugposition berechnet. Dazu wird zunächst eine Orthogonallinie einer konfigurierbaren Länge in einem konfigurierbaren Abstand von der ungefähren Fahrzeugposition konstruiert 51. Anschließend werden Schnittpunkte der DLM-Lanemarkings und der DLM-Lanes mit der orthogonalen Strecke ermittelt 52, getrennt nach Schnittpunkten mit den DLM-Lanemarkings (Marking-Schnittpunkt) und Schnittpunkten mit den DLM-Lanes (Lane-Schnittpunkt). Für jeden Schnittpunkt wird vorzugsweise seine laterale Position relativ zum Fahrzeug, z.B. als Entfernung vom Mittelpunkt der orthogonalen Strecke, und bei DLM-Lanemarkings die Information der Art der assoziierten Fahrbahnmarkierung (Linie gestrichelt/durchgezogen, Leitplanke, Fahrbahnrand, ...) festgehalten. In einem weiteren Schritt werden die Schnittpunkte der orthogonalen Strecke mit den BV-Linien gebildet 53. Wiederum wird für jeden Schnittpunkt vorzugsweise seine laterale Position relativ zum Fahrzeug und die Information der Art der erkannten Fahrbahnmarkierung (Linie gestrichelt/durchgezogen, Leitplanke, Fahrbahnrand, ...) festgehalten.

Basierend auf den Ergebnissen des vorangegangenen Schrittes wird eine Menge von möglichen Fahrzeugpositionen ermittelt 60. Diese werden nachfolgend durch eine Sequenz entsprechender Bewertungsfunktionen bewertet 70, wobei die möglichen Fahrzeugpositionen gegebenenfalls ergänzt oder modifiziert werden. Mit Hilfe der Bewertungsfunktionen werden Strafpunkte vergeben. Eine erste Bewertungsfunktion 71 betrachtet die Zuordnung der von der Kamera erfassten Linientypen zu den in der Karte abgelegten Linientypen. Für diese Bewertung wird vorzugsweise die bereits weiter oben beschriebene konfigurierbare Matrix genutzt, die für jede Kombination aus BV-Linie und Kartenfahrbahnmarkierungstyp einen spezifischen Wert zuordnet. Eine zweite Bewertungsfunktion 72 berücksichtigt die Historie der Fahrzeugpositionen. Mögliche Fahrzeugpositionen, die stark von der Historie abweichen, werden beispielsweise durch hohe Strafpunkte charakterisiert. In der vorliegenden Ausführungsform bewertet eine dritte Bewertungsfunktion 73 den Fahrstreifentyp. Das Fahrzeug wird auf einer regulären Fahrspur der Fahrbahn vermutet. Mögliche Fahrzeugpositionen auf nicht zum Befahren vorgesehene Fahrspuren (Seitenstreifen, "Unbekannte Fahrspuren" des DLM, und Standstreifen,...) werden darum schlecht bewertet, mögliche Fahrzeugpositionen auf befahrbaren Fahrspuren werden neutral bewertet. Als weiteres Beispiel werden für mögliche Fahrzeugpositionen auf der Gegenfahrbahn deutlich höhere Strafpunkte vergeben als für Positionen in Fahrtrichtung. Die Einstellung der Strafpunkte ist abhängig von den verwendeten Sensorsystem und der genutzten digitalen Karte. Somit kann eine konkrete Anpassung für die verwendeten Systeme sehr leicht erfolgen. Als Ergebnis des Bewertungsverfahrens wird schließlich die bestbewertete mögliche Fahrzeugposition selektiert 80, die sogenannte abschließende Position.

Während des Ablaufs des Verfahrens kann es an diversen Stellen vorkommen, dass aufgrund des Fehlens von Eingangsdaten oder einer unzureichenden Qualität der Eingangsdaten eine Positionsbestimmung nicht möglich ist und der Ablauf nicht fortgesetzt werden kann. Für solche Fälle ist es vorgesehen, den modularen Ablauf an der entsprechenden Stelle zu verlassen und eine Fehlerbehandlung 90 zu initiieren. In Fig. 4 sind die Pfade des regulären Ablaufs durch durchgezogene Pfeile, die Pfade bei Abweichung vom regulären Ablauf durch gestrichelte Pfeile gekennzeichnet. Beispielsweise wird bei Nichtverfügbarkeit von Kartendaten für die aktuelle Fahrzeugposition gemäß absoluter Positionsinformation keine Ermittlung der möglichen Fahrzeugpositionen durchgeführt. Bei Ausbleiben absoluter Positionsinformationen (z.B. kein GNSS-Empfang durch Bauwerke) kann bei Verfügbarkeit relativer Positionsinformationen die absolute Positionsinformation durch eine frühere absolute Positionsinformation und relative Positionsinformationen ersetzt werden. Stehen keine relativen Positionsinformationen zur Verfügung, wird bei Ausbleiben absoluter Positionsinformationen keine Ermittlung der möglichen Fahrzeugpositionen durchgeführt. In solchen Fällen wird ein entsprechender Fehlerzustand ausgegeben 91.

Das oben beschriebene Verfahren zur Bestimmung der Fahrzeugposition kann zudem nur dann durchgeführt werden, wenn das Kamerasystem eine ausreichende Menge Fahrbahnmarkierungen korrekt erkannt hat und entsprechend viele zu den DLM-Lanemarkings passende BV-Linien verfügbar sind. Wurden zu wenig BV-Linien erkannt, oder kann keine hinreichend gute Zuordnung vor DLM-Lanemarkings zu BV-Linien gefunden werden, schlägt das reguläre Verfahren fehl.

Die Verfügbarkeit von BV-Linien in ausreichender Anzahl und Genauigkeit ist nicht immer gewährleistet, hauptsächlich aufgrund der Erkennungsgenauigkeit der Kamerasysteme, mitunter auch aufgrund äußerer Einflüsse, wie z.B. Versperrung der Sicht der Kamera durch andere Fahrzeuge oder Unterbrechung der Fahrbahnmarkierungen aufgrund von ausgebesserten Fahrbahnabschnitten.

Wie weiter oben erläutert sind die Bewertungen der möglichen Positionen zuverlässiger, wenn für eine Iteration Positionsinformationen aus der vorausgegangenen Iteration zur Verfügung stehen. Das Verfahren sieht darum Mechanismen 92 vor, auch bei unzureichender Anzahl und/oder Korrektheit der verfügbaren BV-Linien eine zuvor durch das Verfahren ermittelte Position über einen gewissen Zeitraum an die fortgesetzte Fahrzeugbewegung anzupassen und so ein zuvor gewonnenes Ergebnis über kurze Zeiträume des Wegfalls ausreichender Informationen zu BV-Linien zu bewahren. Die eingesetzten Mechanismen werden im Folgenden beschrieben.

Da die Mechanismen darauf beruhen, die Weiterbewegung der abschließenden Position der vorausgegangenen Iteration abzuschätzen, basiert auch die Qualitätsabschätzung des aktuell generierten abschließenden Position auf der Qualitätsabschätzung der vorausgegangenen abschließenden Position. Im Allgemeinen wird der Wert der Qualitätsabschätzung mit jeder Iteration eines der hier beschriebenen Verfahren derart angepasst, dass sich die zu erwartende Zuverlässigkeit entsprechend der sich mit fortschreitenden Iterationen zu erwartenden Abweichungen verschlechtert. Die Abnahme der Qualitätsabschätzung ist konfigurierbar und kann an die zu erwartenden Abweichungen der jeweiligen Fahrzeugintegration angepasst werden. So können Aspekte wie die Genauigkeit und der Funktionsumfang des verwendeten GNSS-Systems, die Verfügbarkeit und Genauigkeit (sprungfreier) relativer Bewegungsinformationen, die Verfügbarkeit, Genauigkeit und Zuverlässigkeit von Sensorfusionsverfahren, etc. berücksichtigt werden. Unterschreitet der ermittelte Qualitätswert einen konfigurierbaren Schwellwert, so schlägt der Abgleich fehl.

In bestimmten Situationen kann ermittelt werden, dass sich das Fahrzeug nur auf genau einer DLM-Lane befinden kann, dass die abschließende Position also eindeutig ist. In diesen Situationen wird die laterale Position des Fahrzeugs so angepasst, dass es sich auf diesem Fahrstreifen befindet.

Ob eine solche Situation vorliegt, hängt mitunter auch von Annahmen ab, welche Fahrstreifen für das Fahrzeug befahrbar und erreichbar sind. So ist es beispielsweise bei Autobahnauf- und -abfahrten mit genau einer Fahrspur und zusätzlich einem Standstreifen wesentlich, ob eine Fahrt auf dem Standstreifen als möglich bzw. als wahrscheinlich betrachtet wird. Wird eine Fahrt auf dem Standstreifen als unmöglich angesehen, so ist es eindeutig, dass sich das Fahrzeug auf der Fahrspur befindet und eine abschließende Position kann bestimmt werden; andernfalls nicht.

Welche Fahrmanöver als möglich und welche als ausreichend unwahrscheinlich angesehen werden, um sie als unmöglich anzusehen, ist stark anwendungsfallabhängig. Eine restriktive Auswahl möglicher Fahrmanöver ist umso nötiger, je länger typischerweise die Zeitabschnitte andauern, während derer vom Kamerasystem keine ausreichenden Informationen zu BV-Linien empfangen werden und je schneller die Qualitätsabschätzung bei Iterationen mit den weiter unten beschriebenen Verfahren für die Positionsbestimmung auf Grundlage der Abschätzung der weiteren Fahrzeugbewegung absinkt. Die Geschwindigkeit des Absinkens der Qualitätsabschätzung ist vor allem dann groß, wenn die zu erwartenden Abweichungen der verwendeten Positionsinformationen groß sind, so dass beispielsweise die Verwendung ausschließlich eines GNSS-Systems mit mittlerer Genauigkeit eine eher restriktive Konfiguration möglicher Fahrmanöver erforderlich machen kann, die Einbindung sprungfreier relativer Positionsinformationen hingegen eine deutlich größere Toleranz möglicher Fahrmanöver erlaubt.

Vorzugsweise können verschiedene Annahmen über Möglichkeit und Unmöglichkeit bestimmter Fahrmanöver konfiguriert werden. Beispielsweise kann mittels eines Parameters festgelegt werden, ob die Straßenverkehrsordnung Berücksichtigung finden soll. Dieser Parameter entscheidet, ob auch solche Fahrbahnmarkierungen als überfahrbar angesehen werden, die nach der Straßenverkehrsordnung nicht überfahren werden dürften, also z.B. durchgezogene Linien oder schraffierte Flächen, oder ob nur bauliche Trennungen als nicht überfahrbar angesehen werden. Ebenso entscheidet dieser Parameter, ob Fahrspuren wie der Standstreifen, die laut Straßenverkehrsordnung nicht befahren werden dürfen, als befahrbar angesehen werden. Eine weitere Möglichkeit ist die Festlegung eines Winkelunterschieds. Eine Fahrbahnen wird nur dann als befahrbar angesehen, wenn sich ihre Fahrtrichtung um weniger als den hier konfigurierten Winkel von dem Kurswinkel des Fahrzeugs unterscheidet.

Bei einer erfolgreichen Bestimmung einer abschließenden Position bei Eindeutigkeit wird für die generierte abschließende Position vorzugsweise der Qualitätswert des abschließenden Position der vorausgegangenen Iteration übernommen.

### Abschließende Position bei nur einer befahrbaren Fahrspur in der Umgebung

Dieses ist das einzige Verfahren für die Bestimmung einer abschließenden Position bei unzureichenden BV-Linien, das ohne die Verwendung der Position aus der vorausgegangenen Iteration verwendet werden kann.

Analog zur Bestimmung der Kartenschnittpunkte wird eine Strecke konstruiert orthogonal zur derzeitigen Fahrzeugbewegung an der longitudinalen Position der derzeitigen Ausgangsposition und es werden die entsprechenden Kartenschnittpunkte bestimmt.

Gibt es auf der orthogonalen Strecke genau einen Schnittpunkt mit einer DLM-Lane, die entsprechend der konfigurierten Annahmen über die Möglichkeiten des Befahrens bestimmter Fahrspuren befahren werden kann, so wird die laterale Position des Fahrzeugs so angepasst, dass sie sich auf dieser DLM-Lane befindet. Andernfalls wird im Anschluss versucht, sofern Positionsinformationen aus der vorausgegangenen Iteration verfügbar sind, mit einem der anderen Verfahren zur Positionsbestimmung bei unzureichenden BV-Linien ein Ergebnis zu erzielen.

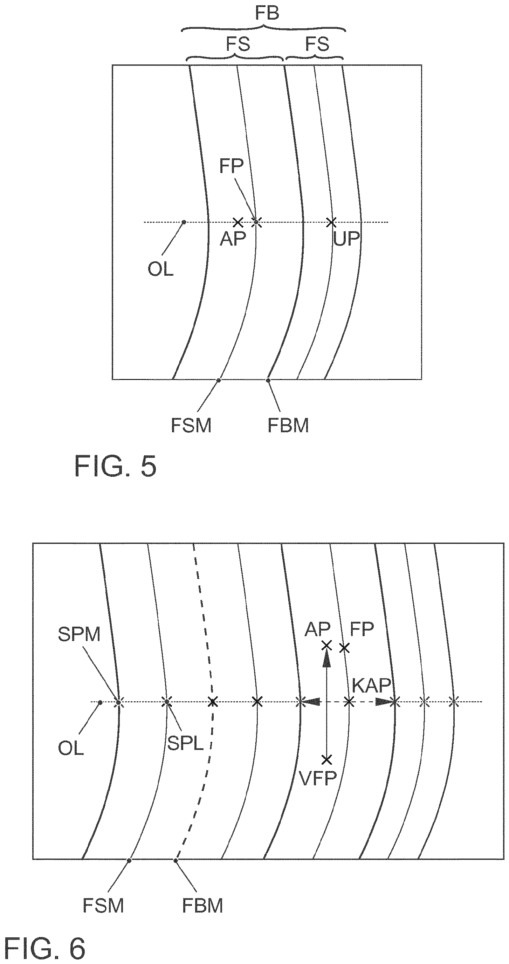

Fig. 5 stellt eine Positionsbestimmung bei nur einer befahrbaren DLM-Lane in der Umgebung dar. Zu sehen ist eine Fahrbahn FB mit zwei Fahrspuren FS, die durch Fahrbahnmarkierungen FBM voneinander abgegrenzt sind, sowie die zugehörigen Fahrspurmitten FSM. Bei der linken Fahrspur handelt es sich um eine reguläre Fahrspur, bei der rechten um einen Standstreifen. Ebenfalls dargestellt sind die Ausgangsposition AP, d.h. die ungefähre Fahrzeugposition, und die konstruierte Orthogonallinie OL. Die Orthogonallinie OL schneidet in diesem Beispiel nur zwei Fahrspuren, wobei die Standstreifenfahrspur nach Straßenverkehrsordnung nicht befahren werden darf und gemäß der im Beispiel angenommenen Konfiguration als unmöglich befahrbar bewertet wird. Der Schnittpunkt UP mit der Standstreifenfahrspur ist daher eine unmögliche Fahrzeugposition. Einzig mögliche Fahrzeugposition ist daher der Schnittpunkt FP mit der linken Fahrspur. Wäre durch die Konfiguration das Befahren von Standstreifen nicht als unmöglich vorgegeben, so gäbe es hier zwei mögliche Fahrspuren und eine Positionsbestimmung auf Basis nur einer befahrbaren DLM-Lane in der Umgebung könnte nicht durchgeführt werden.

### Abschließende Position bei unmöglichem Fahrspurwechsel

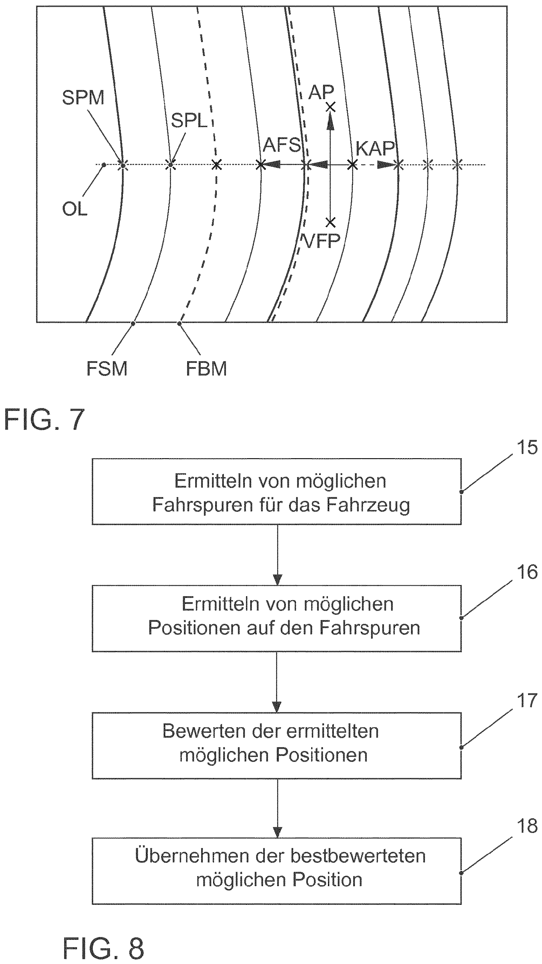

Dieser Ansatz untersucht, ob ein Wechsel der Fahrspur seit der letzten bekannten Position erfolgt sein kann. Er benötigt eine Position aus der vorausgegangenen Iteration als Ausgangspunkt und wird nachfolgend anhand von Fig. 6 und Fig. 7 beschrieben.

Analog zur Bestimmung der Kartenschnittpunkte wird eine Strecke konstruiert orthogonal zur gemittelten Fahrzeugbewegung zwischen der vorherigen und der aktuellen Iteration und an einer longitudinalen Position zwischen der abschließenden Position der vorherigen Iteration und der derzeitigen Ausgangsposition. Basierend auf dieser Strecke werden die entsprechenden Kartenschnittpunkte bestimmt.

Zunächst wird derjenige Lane-Schnittpunkt ermittelt, der der aktuellen Ausgangsposition am besten entspricht. Danach wird geprüft, ob von diesem Schnittpunkt aus ein benachbarter Lane-Schnittpunkt erreicht werden kann. Hierzu werden vom zur Ausgangsposition gehörigen Schnittpunkt ausgehend die nächstliegenden Schnittpunkte nach links und rechts betrachtet und geprüft:
- Handelt es sich um einen Marking-Schnittpunkt, der entsprechend der Annahmen über die möglichen Fahrmanöver überfahren werden kann, so wird die Prüfung in dieser Richtung mit dem nächsten Marking-Schnittpunkt fortgesetzt.
- Handelt es sich um einen Marking-Schnittpunkt, der entsprechend der Annahmen über die möglichen Fahrmanöver nicht überfahren werden kann, so wird die Prüfung in dieser Richtung beendet mit dem Ergebnis, das ein Fahrspurwechsel in diese Richtung nicht möglich ist.
- Handelt es sich um einen Lane-Schnittpunkt, der entsprechend der Annahmen über die möglichen Fahrmanöver befahren werden kann, so wird die Prüfung in dieser Richtung beendet mit dem Ergebnis, das ein Fahrspurwechsel in diese Richtung möglich ist.
- Handelt es sich um einen Lane-Schnittpunkt, der entsprechend der Annahmen über die möglichen Fahrmanöver nicht befahren werden kann, so wird die Prüfung in dieser Richtung beendet mit dem Ergebnis, das ein Fahrspurwechsel in diese Richtung nicht möglich ist.
- Ist kein Schnittpunkt in dieser Richtung mehr vorhanden, so wird die Prüfung in dieser Richtung beendet mit dem Ergebnis, das ein Fahrspurwechsel in diese Richtung nicht möglich ist.

Sofern die Prüfungen ergeben, dass ein Fahrspurwechsel in beiden Richtungen nicht möglich ist, so wird die laterale Position des Fahrzeugs so angepasst, dass sie sich auf der mit der Ausgangsposition identifizierten DLM-Lane befindet.

Fig. 6 zeigt eine Situation, bei der ein Verlassen der DLM-Lane nach links oder rechts unmöglich ist. Dargestellt ist eine Fahrbahn mit vier Fahrspuren, die durch Fahrbahnmarkierungen FBM voneinander abgegrenzt sind, sowie die zugehörigen Fahrspurmitten FSM. Bei der Fahrspur ganz rechts handelt es sich um einen Standstreifen. Ebenfalls dargestellt sind die Ausgangsposition AP, die letzte bekannte Fahrzeugposition VFP, d.h. die abschließende Position der vorherigen Iteration, die zur sprungfreien Bewegung konstruierte Orthogonallinie OL und die Kartenschnittpunkte, getrennt nach Schnittpunkten SPM mit den DLM-Lanemarkings und Schnittpunkten SPL mit den DLM-Lanes. Passierbare Kartenschnittpunkte sind mit durchgehenden Linien markiert, unpassierbare Kartenschnittpunkte mit gestrichelten Linien. Der zur Ausgangsposition AP gehörige Kartenschnittpunkt KAP befindet sich auf einer DLM-Lane, die beidseitig von durchgezogenen Linien begrenzt ist, die nach Straßenverkehrsordnung nicht überfahren werden dürfen. In Fig. 6 wird daher ermittelt, dass ein Verlassen der Fahrspur nach links oder rechts unmöglich ist, was durch die gestrichelten Pfeile symbolisiert wird. Dementsprechend kann eine eindeutige Fahrzeugposition FP bestimmt werden.

Fig. 7 zeigt hingegen beispielhaft eine Situation, in der eine weitere DLM-Lane ermittelt wird, auf die das Fahrzeug wechseln kann. Gemäß der ermittelten Ausgangsposition befindet sich das Fahrzeug auf einer DLM-Lane, die rechts von einer durchgezogenen Linie begrenzt ist, links hingegen von einer einseitigen Fahrstreifenbegrenzung (durchgezogene und gestrichelte Doppellinie), die überfahren werden darf. Es könnte daher ein Spurwechsel nach links auf eine alternative Fahrspur AFS erfolgt sein, was durch die durchgezogenen Pfeile symbolisiert wird. Damit ist die befahrbare DLM-Lane nicht mehr eindeutig und es kann mit dem beschriebenen Verfahren kein Ergebnis gefunden werden. Es wird daher versucht, mit einem der nachfolgend beschriebenen alternativen Verfahren zu einem Ergebnis zu kommen.

Zusätzlich zu den Informationen über die Fahrbahnmarkierungen können bei der Überprüfung, ob ein Fahrspurwechsel möglich ist, auch weitere Informationen verarbeitet werden. Beispielsweise kann ein Fahrspurwechsel auch ohne das Vorhandensein einer durchgezogenen Linie unmöglich sein, falls durch ein entsprechendes Verkehrszeichen ein Überholverbot angezeigt wird. Daher ist es sinnvoll, auch vorhandene Informationen zu Verkehrszeichen zu nutzen, z.B. aus zur Verfügung stehenden Navigationsdaten oder aus den Ergebnissen einer automatischen Verkehrszeichenerkennung.

### Abschätzung der weiteren Fahrzeugbewegung

Nachdem, wie oben in den beschrieben, eine Fahrspur ermittelt wurde, auf der sich das Fahrzeug wahrscheinlich befindet, wird die laterale Position auf dieser Fahrspur bestimmt.

Zu diesem Zweck sind vorzugsweise drei verschiedenen Modi vorgesehen, die per Konfigurationsparameter entsprechend der Fahrzeugintegration gewählt werden können.

In einem ersten Modus "Positionierung auf DLM-Lane" wird die Ausgangsposition lateral auf die Mitte der DLM-Lane verschoben. Die verschobene Position wird als abschließende Position ausgegeben.

In einem zweiten Modus "Positionierung entlang DLM-Lane" wird die Ausgangsposition lateral so verschoben, dass der Abstand zwischen der verschobenen Position und der Mitte der DLM-Lane im Vergleich zur vorausgegangenen abschließenden Position unverändert bleibt. Die verschobene Position wird als abschließende Position ausgegeben.

In einem dritten Modus "Ignorieren der Lane-Geometrien" findet keine Betrachtung der Lane-Geometrien statt, die Abschätzung der Fahrzeugbewegung basiert ausschließlich auf der ermittelten Ausgangsposition. Dazu wird die im vorherigen Durchgang ermittelte Position herangezogen und um die geschätzte Fahrzeugbewegung weiterbewegt. Dieser Modus kann verwendet werden, wenn die Positionsbestimmung, insbesondere die Messung der sprungfreien relativen Bewegung, eine hohe Genauigkeit aufweist.

### Bewertung möglicher fortbewegter Positionen

Die oben beschriebenen Verfahren für die Bestimmung der lateralen Position bei unzureichenden BV-Linien können generalisiert in Analogie zum Vorgehen beim Abgleich der BV-Linien mit der Fahrstreifengeometriekarte aufgebaut werden. Die Bestimmung der lateralen Position erfolgt somit in einem zweistufigen Verfahren aus Bestimmung möglicher Fahrzeugpositionen, Bewertung der Positionen und Auswahl der bestbewerteten Position. Dies ist schematisch in Fig. 8 dargestellt.

Zunächst werden zur vorhergehenden abschließenden Position alle Fahrspuren bestimmt 15, entlang derer das Fahrzeug seine Fahrt fortgesetzt haben könnte. Dies sind insbesondere die zur zuletzt ermittelten abschließenden Position gehörige Fahrspur und gegebenenfalls deren Folgespuren, aber auch die unmittelbar daran angrenzenden Fahrspuren. Unter Folgespuren sind diejenigen Fahrspuren zu verstehen, die eine gegebene Fahrspur in Fahrtrichtung fortsetzen. Beim Übergang von einer einzelnen Fahrspur in zwei Fahrspuren sind diese zwei Fahrspuren Folgespuren der einzelnen Fahrspur. Anhand der Positionsinformationen wird die longitudinale Bewegung des Fahrzeugs bestimmt. Die entsprechend der longitudinalen Bewegung in der Zeit seit der vorausgegangenen Positionsbestimmung zurückgelegte Strecke wird ausgehend von der zuvor bestimmten Position entlang der möglichen Fahrtwege abgetragen. Die jeweiligen Endpunkte werden als mögliche Positionen aufgenommen 16.

Im Anschluss erfolgt eine Bewertung 17 der ermittelten möglichen Positionen. Die bestbewertete mögliche Position wird schließlich als näherungsweise laterale Position des Fahrzeugs übernommen 18. Ein erstes Bewertungskriterium kann dabei die Entsprechung der Relativbewegung laut Positionsinformationen sein. Die Position entsprechend der vorherigen Positionsbestimmung wird entsprechend der sich aus den Positionsinformationen ergebenden Relativbewegung weitergeführt. Die ermittelten möglichen Positionen werden umso besser bewertet, je näher sie dieser weitergeführten vorherigen Position liegen.

Die möglichen Positionen werden ergänzt um neue mögliche Positionen, die zwischen einer vorhandenen möglichen Positionen und der weitergeführten vorherigen Position liegen. Dabei sind die neuen möglichen Positionen entsprechend der Bewertung der vorherigen Position und der Bewertung der vorhandenen möglichen Positionen gewichtet näher an der Position mit der jeweils besseren Bewertung gelegen.

Ein zweites Bewertungskriterium kann die Distanz zur neuen Positionsinformation sein. Mögliche Positionen mit geringer Distanz zur aktuellen Positionsinformation werden positiv bewertet.

Unabhängig davon, auf welche Weise die abschließende laterale Position beziehungsweise die näherungsweise laterale Position ermittelt wurde, werden in einem abschließenden Schritt 100 die Ergebnisse aufbereitet, für die weitere Verarbeitung zur Verfügung gestellt und in die Historie übernommen.

### Bezugszeichenliste

- 10: Detektieren von Fahrbahnmarkierungen
- 11: Bestimmen einer Ausgangsposition für das Fahrzeug
- 12: Feststellen unzureichender detektierter Fahrbahnmarkierungen
- 13: Ermitteln einer näherungsweisen lateralen Position
- 15: Ermitteln von möglichen Fahrspuren für das Fahrzeug
- 16: Ermitteln von möglichen Positionen auf den Fahrspuren
- 17: Bewerten der ermittelten möglichen Positionen
- 18: Übernehmen der bestbewerteten möglichen Position
- 20: Vorrichtung
- 21: Eingang
- 22: Bildverarbeitungseinheit
- 23: Positionsbestimmungseinheit
- 24: Auswerteeinheit
- 25: Kameraeinheit
- 26: GPS-Empfänger
- 27: Ausgang
- 28: Speicher
- 30: Vorrichtung
- 31: Speicher
- 32: Prozessor
- 33: Eingang
- 34: Ausgang
- 40: Aufbereitung der Eingangsdaten
- 41: Bestimmen einer ungefähren Fahrzeugposition
- 42: Überführen in WGS84-Koordinatensystem
- 43: Abgleich der neu übermittelten Geometrien
- 50: Extrahieren von Geometrieaspekten
- 51: Konstruieren einer Orthogonallinie
- 52: Ermitteln von Kartenschnittpunkten
- 53: Ermitteln von Schnittpunkten mit BV-Linien
- 60: Ermitteln von möglichen Fahrzeugpositionen
- 70: Bewerten der möglichen Fahrzeugpositionen
- 71: Erste Bewertungsfunktion
- 72: Zweite Bewertungsfunktion
- 73: Dritte Bewertungsfunktion
- 80: Selektion der bestbewerteten Fahrzeugposition
- 90: Fehlerbehandlung
- 91: Ausgeben eines Fehlerzustands
- 92: Kartenbasiertes Verfahren
- 100: Aufbereiten der Ergebnisse
- 110: Kartendaten-Server
- FB: Fahrbahn
- FS: Fahrspur
- FSM: Fahrspurmitte
- FBM: Fahrbahnmarkierung
- OL: Orthogonallinie
- AP: Ausgangsposition
- FP: Fahrzeugposition
- UP: Unmögliche Fahrzeugposition
- SPM: Marking-Schnittpunk
- SPL: Lane-Schnittpunkt
- VFP: Letzte bekannte Fahrzeugposition
- KAP: Zur Ausgangsposition gehöriger Kartenschnittpunkt
- AFS: Alternative Fahrspur

## Patentansprüche

1. Verfahren zur Bestimmung einer lateralen Position eines Fahrzeugs relativ zu den Fahrspuren (FS) einer Fahrbahn (FB), mit den Schritten:
- Detektieren (10) von Fahrbahnmarkierungen (FBM);
- Bestimmen (11) einer Ausgangsposition (AP) für das Fahrzeug basierend auf Empfangsdaten eines GPS-Empfängers (26);
- wobei, wenn festgestellt wird, dass die detektierten Fahrbahnmarkierungen (FBM) nicht in ausreichender Anzahl und Genauigkeit verfügbar sind, um durch Vergleichen der detektierten Fahrbahnmarkierungen mit Fahrbahnmarkierungsinformationen aus einer Fahrstreifengeometriekarte für die für das Fahrzeug bestimmte Ausgangsposition eine laterale Position des Fahrzeugs zu ermitteln, eine näherungsweise laterale Position unter Berücksichtigung von Informationen aus der Fahrstreifengeometriekarte ermittelt wird, wobei die folgenden Schritte ausgeführt werden:
- Konstruieren einer Orthogonallinie (OL) an der Ausgangsposition (AP) orthogonal zur einer derzeitigen Fahrzeugbewegung;
- Bestimmen von Schnittpunkten (FP, UP) zwischen der Orthogonallinie (OL) und den Fahrspurmitten (FSM) der Fahrstreifengeometriekarte für die für das Fahrzeug bestimmte Ausgangsposition (AP);
- Ermitteln auf Basis der Schnittpunkte (FP, UP), dass unter Berücksichtigung konfigurierter Annahmen über mögliche Fahrmanöver, die definieren, welche Fahrspuren (FS) als befahrbar angesehen werden, nur einer der Schnittpunkte (FP) auf einer als befahrbar angesehenen Fahrspur (FS) liegt; und
- Ermitteln (13) des Schnittpunktes (FP) mit der als befahrbar angesehenen Fahrspur (FS) als näherungsweise laterale Position des Fahrzeugs; oder
- Konstruieren einer Orthogonallinie (OL) orthogonal zu einer gemittelten Fahrzeugbewegung zwischen einer vorherigen Iteration der Positionsbestimmung und der derzeitigen Fahrzeugbewegung und an einer longitudinalen Position zwischen einer in der vorherigen Iteration bestimmten abschließenden Position (VFP) und der derzeitigen Ausgangsposition (AP);
- Bestimmen von Schnittpunkten (SPL, SPM) zwischen der Orthogonallinie (OL) und den Fahrbahnmarkierungen und Fahrspurmitten (FSM) der Fahrstreifengeometriekarte für die für das Fahrzeug bestimmte Ausgangsposition (AP);
- Ermitteln auf Basis der Schnittpunkte (SPL, SPM), unter Berücksichtigung konfigurierter Annahmen über mögliche Fahrmanöver, die definieren, welche Fahrbahnmarkierungen als überfahrbar angesehen werden und welche Fahrspuren (FS) als befahrbar angesehen werden, dass ausgehend von der in der vorherigen Iteration bestimmten abschließenden Position (VFP) kein Fahrspurwechsel möglich ist; und
- Ermitteln (13) einer Position auf der durch die Ausgangsposition (AP) identifizierten Fahrspur (FS) als näherungsweise laterale Position (FP) des Fahrzeugs.

2. Verfahren gemäß Anspruch 1, **wobei** für das Bestimmen einer Position auf der identifizierten Fahrspur (FS) mehrere Modi vorgesehen sind, die mittels eines Konfigurationsparameters gewählt werden können.

3. Verfahren gemäß Anspruch 2, **wobei** in einem ersten Modus die Ausgangsposition (AP) lateral auf die Mitte der Fahrspur (FS) verschoben wird, gemäß einem zweiten Modus die Ausgangsposition (AP) lateral so verschoben wird, dass der Abstand zwischen der verschobenen Position und der Mitte der Fahrspur (FS) im Vergleich zur zuvor ermittelten lateralen Position (VFP) unverändert bleibt, und gemäß einem dritten Modus keine Betrachtung der Geometrie der Fahrspur (FS) stattfindet und die Abschätzung der Fahrzeugbewegung ausschließlich auf der ermittelten Ausgangsposition (AP) basiert.

4. Verfahren gemäß Anspruch 1, **wobei** das Verfahren die Schritte umfasst:
- Ermitteln (15) von Fahrspuren (FS), auf denen das Fahrzeug ausgehend von der zuvor ermittelten lateralen Position (VFP) seine Fahrt fortgesetzt haben könnte;
- Ermitteln (16) von möglichen Positionen auf den ermittelten Fahrspuren (FS);
- Bewerten (17) der ermittelten möglichen Positionen; und
- Übernehmen (18) der bestbewerteten möglichen Position als näherungsweise laterale Position (FP) des Fahrzeugs.

5. Verfahren gemäß Anspruch 4, **wobei** die ermittelten Fahrspuren (FS) die zur zuvor ermittelten lateralen Position (VFP) gehörige Fahrspur (FS) und gegebenenfalls deren Folgespuren sowie die unmittelbar daran angrenzenden Fahrspuren (FS) umfassen.

6. Vorrichtung (20) zur Bestimmung einer lateralen Position eines Fahrzeugs relativ zu den Fahrspuren (FS) einer Fahrbahn (FB), wobei die Vorrichtung (20) folgendes aufweist:
- eine Bildverarbeitungseinheit (22) zum Detektieren (10) von Fahrbahnmarkierungen (FBM);
- eine Positionsbestimmungseinheit (23) zum Bestimmen (11) einer Ausgangsposition (AP) für das Fahrzeug basierend auf Empfangsdaten eines GPS-Empfängers (26); und
- eine Auswerteeinheit (24) die eingerichtet ist, das Verfahren gemäß einem der Ansprüche 1 bis 5 auszuführen.

7. Computerlesbares Speichermedium mit Instruktionen, die bei Ausführung durch einen Computer den Computer zur Ausführung der Schritte des Verfahrens gemäß einem der Ansprüche 1 bis 5 zur Bestimmung einer lateralen Position eines Fahrzeugs relativ zu den Fahrspuren (FS) einer Fahrbahn (FB) veranlassen.

8. Autonom oder manuell gesteuertes Fahrzeug, **dadurch gekennzeichnet, dass** es eine Vorrichtung gemäß Anspruch 6 aufweist oder eingerichtet ist, ein Verfahren gemäß einem der Ansprüche 1 bis 5 auszuführen.

## Claims

1. Method for determining a lateral position of a vehicle relative to the lanes (FS) of a roadway (FB), comprising the steps of:
- detecting (10) roadway markings (FBM);
- determining (11) a starting position (AP) for the vehicle based on reception data of a GPS receiver (26);
- wherein, when it is established that the detected roadway markings (FBM) are not available in sufficient numbers and accuracy to ascertain a lateral position of the vehicle by comparing the detected roadway markings with roadway marking information from a lane geometry map for the starting position determined for the vehicle, an approximately lateral position is ascertained by taking into account information from the lane geometry map, wherein the following steps are carried out:
- constructing an orthogonal line (OL) at the starting position (AP) orthogonal to a current vehicle movement;
- determining intersections (FP, UP) between the orthogonal line (OL) and the lane centres (FSM) of the lane geometry map for the starting position (AP) determined for the vehicle;
- based on the intersections (FP, UP), ascertaining, by taking into account configured assumptions about possible driving manoeuvres which define which lanes (FS) are considered to be driveable, that only one of the intersections (FP) is located in a lane (FS) which is considered to be driveable; and
- ascertaining (13) the intersection (FP) with the lane (FS) which is considered to be driveable as an approximately lateral position of the vehicle; or
- constructing an orthogonal line (OL) orthogonal to an averaged vehicle movement between a previous iteration of the position determination and the current vehicle movement and at a longitudinal position between a final position (VFP) determined in the previous iteration and the current starting position (AP);
- determining intersections (SPL, SPM) between the orthogonal line (OL) and the lane markings and lane centres (FSM) of the lane geometry map for the starting position (AP) determined for the vehicle;
- based on the intersections (SPL, SPM), ascertaining, by taking into account configured assumptions about possible driving manoeuvres which define which lane markings are considered to be able to be driven over and which lanes (FS) are considered to be driveable that, proceeding from the final position (VFP) determined in the previous iteration, it is not possible to change lanes; and
- ascertaining (13) a position in the lane (FS) identified by the starting position (AP) as an approximately lateral position (FP) of the vehicle.

2. Method according to Claim 1, wherein a plurality of modes, which can be selected by means of a configuration parameter, are provided for determining a position in the identified lane (FS).

3. Method according to Claim 2, wherein, in a first mode, the starting position (AP) is shifted laterally to the centre of the lane (FS), according to a second mode, the starting position (AP) is shifted laterally so that the distance between the shifted position and the centre of the lane (FS) remains the same in comparison with the previously ascertained lateral position (VFP), and, according to a third mode, the geometry of the lane (FS) is not observed and the approximation of the vehicle movement is based exclusively on the ascertained starting position (AP).

4. Method according to Claim 1, wherein the method comprises the steps of:
- ascertaining (15) lanes (FS) in which the vehicle may have continued its journey proceeding from the previously ascertained lateral position (VFP);
- ascertaining (16) possible positions in the ascertained lanes (FS);
- evaluating (17) the ascertained possible positions; and
- adopting (18) the possible position with the best evaluation as an approximately lateral position (FP) of the vehicle.

5. Method according to Claim 4, wherein the ascertained lanes (FS) include the lane (FS) associated with the previously ascertained lateral position (VFP) and possibly the subsequent lanes thereof as well as the directly adjoining lanes (FS).

6. Device (20) for determining a lateral position of a vehicle relative to the lanes (FS) of a roadway (FB), wherein the device (20) comprises the following:
- an image processing unit (22) for detecting (10) roadway markings (FBM);
- a position determination unit (23) for determining (11) a starting position (AP) for the vehicle based on reception data of a GPS receiver (26); and
- an evaluation unit (24) which is configured to carry out the method according to one of Claims 1 to 5.

7. Computer-readable storage medium comprising instructions which, when executed by a computer, cause the computer to carry out the steps of the method according to one of Claims 1 to 5 for determining a lateral position of a vehicle relative to the lanes (FS) of a roadway (FB).

8. Autonomously or manually controlled vehicle, **characterized in that** said vehicle comprises a device according to Claim 6 or is configured to carry out a method according to one of Claims 1 to 5.

## Revendications

1. Procédé permettant de déterminer une position latérale d'un véhicule par rapport aux voies de circulation (FS) d'une chaussée (FB), comprenant les étapes consistant à :
- détecter (10) des marquages au sol (FBM) ;
- déterminer (11) une position initiale (AP) pour le véhicule sur la base de données de réception d'un récepteur GPS (26) ;
- dans lequel, lorsqu'il est constaté que les marquages au sol (FBM) détectés ne sont pas disponibles en nombre suffisant et avec une précision suffisante pour établir une position latérale du véhicule par la comparaison des marquages au sol détectés avec des informations de marquage au sol provenant d'une carte de la géométrie des voies de circulation pour la position initiale déterminée pour le véhicule, une position latérale approximative est établie en tenant compte d'informations provenant de la carte de la géométrie des voies de circulation, dans lequel les étapes suivantes sont effectuées, consistant à :
- construire une ligne orthogonale (OL) à la position initiale (AP) orthogonalement à un mouvement de véhicule actuel ;
- déterminer des points d'intersection (FP, UP) entre la ligne orthogonale (OL) et les centres de voie de circulation (FSM) de la carte de la géométrie des voies de circulation pour la position initiale (AP) déterminée pour le véhicule ;
- établir sur la base des points d'intersection (FP, UP) qu'en tenant compte de suppositions configurées concernant des manoeuvres possibles qui définissent les voies de circulation (FS) pouvant être considérées comme utilisables, un seul des points d'intersection (FP) se trouve sur une voie de circulation (FS) considérée comme utilisable ; et
- établir (13) le point d'intersection (FP) avec la voie de circulation (FS) considérée comme utilisable comme la position latérale approximative du véhicule ;
ou
- construire une ligne orthogonale (OL) orthogonalement à un mouvement de véhicule moyenné entre une itération précédente de la détermination de position et le mouvement de véhicule actuel et une position longitudinale entre une position finale (VFP) déterminée à l'itération précédente et la position initiale (AP) actuelle ;
- déterminer des points d'intersection (SPL, SPM) entre la ligne orthogonale (OL) et les marquages au sol et les centres de voie de circulation (FSM) de la carte de la géométrie des voies de circulation pour la position initiale (AP) déterminée pour le véhicule ;
- établir sur la base des points d'intersection (SPL, SPM), en tenant compte de suppositions configurées concernant des manoeuvres possibles qui définissent les marquages au sol considérés comme franchissables et les voies de circulation (FS) considérées comme utilisables, qu'en partant de la position finale (VFP) déterminée à l'itération précédente, aucun changement de voie de circulation n'est possible ; et
- établir (13) une position sur la voie de circulation (FS) identifiée par la position initiale (AP) comme la position latérale approximative (FP) du véhicule.

2. Procédé selon la revendication 1, dans lequel pour la détermination d'une position sur la voie de circulation identifiée (FS), plusieurs modes sont prévus qui peuvent être sélectionnées au moyen d'un paramètre de configuration.

3. Procédé selon la revendication 2, dans lequel dans un premier mode, la position initiale (AP) est décalée latéralement vers le milieu de la voie de circulation (FS), selon un deuxième mode, la position initiale (AP) est décalée latéralement de telle sorte que la distance entre la position décalée et le milieu de la voie de circulation (FS) reste inchangée en comparaison avec la position latérale (VFP) établie précédemment, et selon un troisième mode, la géométrie de la voie de circulation (FS) n'est pas prise en considération et l'estimation du mouvement de véhicule est basée uniquement sur la position initiale (AP) établie.

4. Procédé selon la revendication 1, dans lequel le procédé comprend les étapes consistant à :
- établir (15) des voies de circulation (FS) sur lesquelles le véhicule aurait pu avoir poursuivi sa route en partant de la position latérale (VFP) établie précédemment ;
- établir (16) des positions possibles sur les voies de circulation (FS) établies ;
- évaluer (17) les positions possibles établies ; et
- adopter (18) la position possible avec la meilleure évaluation comme position latérale approximative (FP) du véhicule.

5. Procédé selon la revendication 4, dans lequel les voies de circulation établies (FS) comprennent la voie de circulation (FS) appartenant à la position latérale (VFP) précédemment établie et le cas échéant les voies qui la suivent ainsi que les voies de circulation (FS) directement adjacentes à celle-ci.

6. Dispositif (20) permettant de déterminer une position latérale d'un véhicule par rapport aux voies de circulation (FS) d'une chaussée (FB), le dispositif présentant :
- une unité de traitement d'image (22) pour détecter (10) des marquages au sol (FBM) ;
- une unité de détermination de position (23) pour déterminer (11) une position initiale (AP) pour le véhicule sur la base de données de réception d'un récepteur GPS (26) ; et
- une unité d'évaluation (24) qui est conçue pour effectuer le procédé selon l'une quelconque des revendications 1 à 5.

7. Support de stockage lisible par ordinateur, comprenant des instructions qui, lorsqu'elles sont exécutées par un ordinateur, font que l'ordinateur exécute les étapes du procédé selon l'une quelconque des revendications 1 à 5 pour déterminer une position latérale d'un véhicule par rapport aux voies de circulation (FS) d'une chaussée (FB).

8. Véhicule à commande autonome ou manuelle, **caractérisé en ce qu'**il présente un dispositif selon la revendication 6 ou est conçu pour effectuer un procédé selon l'une quelconque des revendications 1 à 5.
